# EUROPEAN PATENT SPECIFICATION

(11) **EP 3 126 121 B1**
(45) Date of publication and mention of the grant of the patent: **21.10.2020**
(21) Application number: 15712659.0
(22) Date of filing: 30.03.2015
(51) Int. Cl.: B29C 65/40, B29C 65/02, B29C 48/02, B29C 48/80

(54) **HAND WELDING EXTRUDER**
HANDSCHWEISSEXTRUDER
EXTRUDEUSE À SOUDAGE MANUEL

(30) Priority: 31.03.2014 WO PCT/EP2014/056462
(43) Date of publication of application: 08.02.2017
(73) Proprietor: PF Schweisstechnologie GmbH, 36304 Alsfeld (DE)
(72) Inventor: BLAU, Tina, 63303 Dreieich (DE); SPYCHALSKI-MERLE, Achim, 36304 Alsfeld (DE)
(74) Representative: Eisenführ Speiser
(86) International application number: PCT/EP2015/056914
(87) International publication number: WO 2015/150336

(56) References cited:
- EP-A1- 0 594 889
- WO-A1-2010/079140
- DE-A1- 2 823 171
- DE-A1-102006 035 250
- NL-C2- 1 010 957
- US-A1- 2010 147 465

## Description

The invention concerns a compact hand welding extruder for welding plastic materials. In particular, the invention pertains to a hand welding extruder comprising in one casing a material inlet channel, an extruder unit, an air blower and a motor unit.

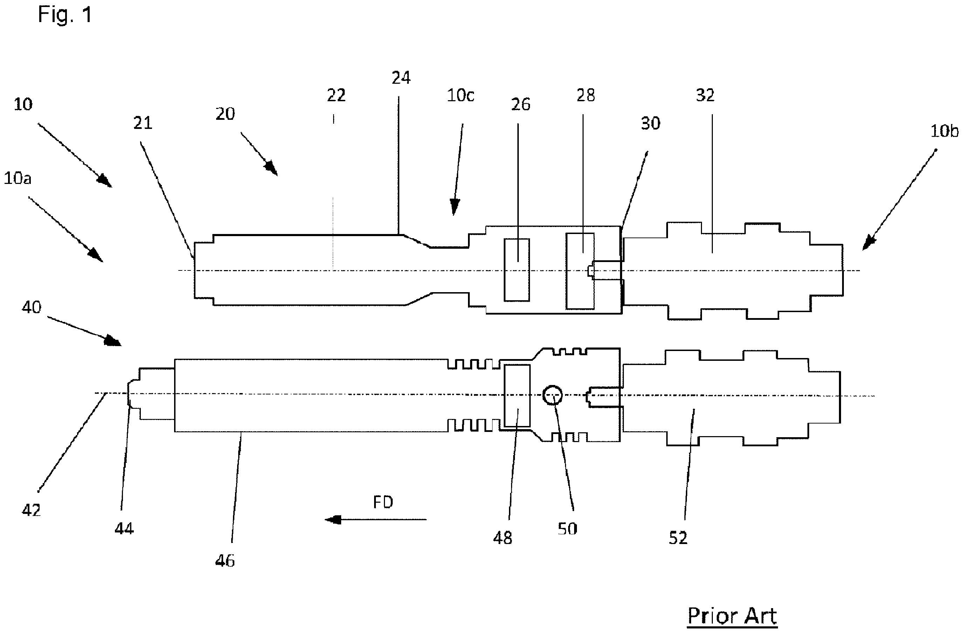

For welding plastic materials, various types of hand welding extruder are known. Basically, hand welding extruders comprise an independent extruder unit and an independent blower unit for blowing hot air at a welding spot. The plastic material is usually provided as a wire or in small pieces, e.g. as a granulate. A standard type of hand welding extruder as known from prior art is schematically illustrated in Fig. 1.

The extruder unit 40 with an extruder axis 42, a distal end 10a, a proximal end 10b and a central portion 10c located between the proximal end 10a and the distal end 10b comprises an extruder casing 46, a material inlet channel 50 extending through the extruder casing 46, an extruder screw (not shown) with a feeding direction FD parallel to the extruder axis 42, a motor unit 52 for driving the extruder screw, a processing chamber (not shown) surrounding a center part of the extruder screw, a heating element 48 and an extruder die 44 located at the end of the extruder screw to which the plastic material is forwarded. The extruder screw is located inside the extruder casing 46 and forming a gap with an inner wall of the processing chamber. In feeding direction FD of the extruder screw, the gap between the extruder screw and the inner wall of the processing chamber decreases constantly.

In operation of the extruder unit 40, plastic material is fed through the material inlet channel 50 to the extruder screw. In case the plastic material is provided as a wire, the extruder screw breaks the wire into small plastic elements. The small plastic elements are forwarded by the extruder screw through the processing chamber in which the plastic is liquefied or plasticized under supply of heat from the heating element 48. Towards the distal end 10a of the processing chamber, the plastic material is compressed due to the decreasing gap between the extruder screw and the inner wall of the processing chamber, causing a further increase of the temperature of the plastic. Thus, the plastic granulate is fully melt when reaching an outlet of the melting chamber. Subsequently, the liquefied or plasticized plastic material is discharged from the processing chamber and thereby leaving the extruder unit 40 through the extruder die 44.

Air blower unit 20 comprises an air blower casing 24, an air blower axis 22, an air inlet 30, an air blower heating element 26, a fan 28, an air blower motor unit 32 for driving the fan 28 and an air outlet 21. Air blower unit 20 is arranged parallel with extruder unit 40 and spaced apart from parallel extruder unit 40. In an alternative embodiments, air blower unit 20 is arranged angularly with respect to extruder unit 40, generally such that air outlet 21 is basically facing towards extruder die 44. Air blower unit 20 basically has two functions. Firstly, it blows hot air from air outlet 21 at a welding area that is supposed to be welded, thereby heating up that welding area. A welding area could be the edges of two adjacent sheets of plastic or an intended joint of different areas of the same piece of plastic that abut each other. In that process, the welding area is heated up until it becomes soft or plasticized. In this condition, the welding area can be mated best with the liquefied or plasticized plastic of the extrusion unit 40. Secondly, the air blower unit 20 blows hot air from air outlet 21 at the liquefied or plasticized plastic material that is discharged from extruder unit 40 through extruder die 44, thereby preventing the plastic material from solidification.

Common hand welding extruder have the disadvantage that due to the structure of the independent extruder unit and the independent blower unit, the size of the hand welding extruder is relatively big and thus, too big for certain industrial applications, e.g. for welding the inside of specific plastic tubes. Furthermore, the consumption of energy of hand held extruder is quite high, especially due to the dissipation of heat though the extruder casing and the air blower casing as well as the amount of electric loads. In addition, ordinary hand welding extruders are often relatively heavy, thus quickly exhausting the operator, especially when working overhead. EP0594889 discloses a hand welding extruder including a motor configured to drive the extruder screw and the fan of the air blower unit. WO2010079140, US2010147465, DE102006035250, NL1010957C and DE2823171 disclose hand welding devices with various configurations of extruder and air blower units.

Therefore, it is an object of the invention to provide a hand welding extruder that does not show the disadvantages of the common hand held extruder. In particular, it is an object of the present invention to provide a hand welding extruder that is more compact, lighter weight, easier to handle, and which has a reduced energy consumption than a hand held extruder according to the state of the art.

This object is achieved by a hand welding extruder for welding plastic materials according to the present invention as defined by the appended claims.

In a first aspect, the hand welding extruder of the present invention has a proximal end, a distal end and a central portion longitudinally extending between the proximal end and the distal end. The proximal end is facing substantially towards the user during a welding operation, while the distal end is facing towards or is touching the welding site to which the molten plastic material is applied.

The hand welding extruder further comprises a material inlet channel for feeding plastic material; a material outlet at the distal end; an extruder unit having a longitudinally extending extruder casing encompassing a processing chamber of the extruder unit, a central extruder axis extending along the central portion, a central extruder screw arranged coaxially with the extruder axis and configured to convey the plastic material from the material inlet channel through the processing chamber towards the material outlet, and at least one extruder heating element for heating the plastic material inside the processing chamber. The hand welding extruder further comprises a handle for holding and guiding the hand welding extruder; and an air blower unit for blowing hot air towards a welding site in the vicinity of the material outlet. The air blower unit has a longitudinally extending air blower casing at least partially circumferentially encompassing at least a portion of the length of the extruder unit, an air inlet at an end of an inlet air duct, an air outlet arranged at a distal end of an outlet air duct in the vicinity of the material outlet, and a fan arranged to convey air from the inlet air duct to the outlet air duct of the air blower unit. The hand welding extruder further comprises a motor unit arranged between the extruder unit and the proximal end of the hand welding extruder and configured to drive the extruder screw and the fan of the air blower unit.

By these means, instead of two motor units, just one motor unit needs to be operated. Furthermore, no external source of pressurized air is required, which is used in many common welding extruders, so that it is not necessary to couple any unhandy air hoses to the hand welding extruder. Thus, the outer dimensions, weight and energy consumption of the hand welding extruder according to the invention can be reduced by improving its overall performance and operability. It has to be noted that according to the present invention the extruder unit and the air blower unit are arranged to form one compact device, so that the casing of the extruder unit and the casing of the air blower unit may be coupled to each other or may be manufactured in an integrated form so that they appear as a single compact casing that has a substantially tubular shape. It is preferred that at least one part of the air blower casing is a part of a main casing. More preferably, the complete air blower casing is a part of the main casing or constitutes the main casing. Thus, the dimensions and weight of the hand welding extruder can be further reduced.

In a further development of the invention, the hand welding extruder further comprises a gear providing different rotation speeds for the extruder screw of the extruder unit and the fan of the air blower unit.

By these means, the fan and the extruder screw can be driven by the same motor unit and still being operated at different speeds. Preferably, the gear is integrated within the motor unit, wherein the motor unit provides two output shafts, one for the extruder unit and one for the fan of the air blower unit. These output shafts may be coaxial, or may be arranged parallel and adjacent to each other. It is also feasible to provide a clutch mechanism between the motor unit and the extruder screw, so that the extruder screw can be disengaged from the motor unit and only the air fan can be operated for pre-warming the welding site prior to the proper welding operation. This can also be achieved by providing within the motor unit a stronger motor driving the extruder screw and a second smaller motor driving the air fan. In this case, the gear is not necessary so that the entire hand welding extruder may still be very compact and lightweight, wherein the air blower and the extruder unit may be operated independent from each other.

Thus, dissipating heat from the extruder unit can be used for heating air of the air blower unit, and the air blower casing with the outlet air duct provides an external sheath, so that the hot extruder casing is thermally shielded by the air blower casing and the outlet air duct, preventing that an operator can get hurt by the hot extruder casing. This feature also contributes to a reduction of the outer dimensions, weight and energy consumption of the hand welding extruder.

Preferably, the extruder unit and air blower unit as well as the outlet air duct are arranged coaxially. This construction allows a more compact arrangement of extruder unit and air blower unit as well as a better distribution of heat from the extruder unit to the air within the air blowing unit. Thus, the outer dimensions, weight and energy consumption of the hand welding extruder is further reduced.

In an independent further development of the invention, the at least one of the extruder heating elements is configured to heat also air inside the air blower unit, preferably air flowing through the outlet air duct. In this case, a part of the at least one of the heating elements may be arranged at the extruder casing for heating the plastic material inside the processing chamber, and wherein another part of the heating element may be arranged at or within the outlet air duct of the air blower unit for heating the air flowing to the air outlet.

This construction allows a more compact arrangement of extruder unit and air blower unit as well as a better distribution of heat from the heating element to the air within the air blowing unit. Thus, energy consumption of the hand welding extruder is further reduced, while operability is improved. It is preferred that the heating element has a substantially tubular shape or substantially the shape of a segment of a tube. This compact heating element allows reducing the size and weight of the hand welding extruder.

Thus, the air blower unit does not need a separate air heating element. This feature further contributes to a reduction of the outer dimensions, weight and energy consumption of the hand welding extruder.

In an independent further development of the invention, at least one of the extruder heating elements is a central heating element arranged at or within the extruder screw for heating the plastic material inside the processing chamber. By these means, the plastic material inside the extruder can be heated in an efficient way. Furthermore, the size and/or weight of the hand welding extruder can be further reduced by this feature.

According to the invention, the inlet air duct at least partially encompasses circumferentially at least a portion of the length of the extruder casing and/or the outlet air duct, wherein the air inlet is arranged at the distal end of the inlet air duct and preferably is substantially directed to the distal end of the hand welding extruder. The air inlet is thus arranged in a distal area of the central portion of the extruder with a sufficient distance to the air outlet so that in the main cool and fresh air is drawn into the air inlet and absorbs heat dissipated by the extruder unit. In this case at least one portion of the inlet air duct may be arranged at a circumferential position corresponding to a handle segment of the handle so that said portion of the inlet air duct resides between the grip and the extruder unit. Thus, the inlet air duct provides an additional sheath for shielding the hand of a user gripping the handle segment from the heat of the extruder unit or the heat of the outlet air duct, while the inlet air stream absorbs dissipated heat from the extruder unit and energy consumption is thus further reduced. On the other hand, if the air inlet of the inlet air duct is arranged somewhat closer to the distal end of the hand welding extruder, i.e. closer to the air outlet, the air drawn into the inlet air duct partially comprises warm air of the vicinity of the welding site, so that the temperature of the intake air is somewhat increased and energy consumption of the hand welding extruder is further reduced. Since in this case the warmer intake air has still a considerable lower temperature than the hot air stream within the outlet air duct, the heat shielding effect provided to the user hand by the inlet air duct, as described above, is also present.

In an independent further development of the invention, the hand welding extruder further comprises a separate air heating element arranged within the outlet air duct, preferably in the vicinity of the air outlet. The separate air heating element may be arranged at any location along the air flow, and is preferably arranged close to the air outlet of the air blower unit. This separate air heating element may have a relative small heating power and may provide for a relative small additional heat input, because the air in the outlet air duct is already substantially heated to a desired temperature by the extruder heating element directly or via dissipated heat from the extruder unit.

In an independent further development of the invention, a distal portion of the outlet air duct comprising the air outlet is configured to be rotatable about the central extruder axis with respect to the extruder casing. Preferably, said distal portion of the outlet air duct can be freely rotated about 360 degrees. Thus, by rotating the distal portion of the outlet air duct, the hand welding extruder may be freely rotated about 360 degrees during use, so as to adapt the position of the extruder and its handle to the welding geometry of to the preference of a user (such as right-handers and left-handers), so that the air outlet is blowing the hot air onto an approaching welding site in front of the material outlet during the movement of a continuous welding operation along welding seam. This provides the advantage that time consuming and cumbersome adjustment of the handle is not necessary.

Furthermore, the hand welding extruder may comprise an extruder die at the material outlet, wherein the extruder die is preferably configured to be rotatable about the extruder axis with respect to the extruder casing. In this case, the extruder die may be configured to rotate synchronously with the distal portion of the outlet air duct. In this manner, the hot air exiting the air outlet is always directed to a position in front of the extruder die with respect to the moving direction during a continuous welding operation.

In an independent further development of the invention, the material inlet channel has a proximal opening at the proximal end of the hand welding extruder, wherein the proximal opening preferably is shaped like a funnel. In this case, the material inlet channel may pass from the proximal opening along a side of the motor unit into the processing chamber. Alternatively, the material inlet channel may pass from the proximal opening through a hollow output shaft of the motor unit into the processing chamber.

Thus, the plastic material may be threaded into the funnel-shaped proximal opening of the material inlet channel very easily, for example without looking at the opening. Furthermore, the proximal opening of the material inlet channel arranged at the proximal end of the hand welding extruder enables the user to freely rotate the hand welding extruder about its longitudinal axis without wrapping the thread of plastic material to be fed into the extruder around the handle or central portion of the extruder. Hence, the operability is further improved.

In an independent further development of the invention, the handle is a fixed handle which does not need any adjustments. The handle comprises two primary handle segments (handle bars) extending perpendicular to and in distance to the central portion of the hand welding extruder on opposite sides of said central portion, and two secondary handle segments (handle bars) connecting the primary handle segments on both sides. The two primary handle segments are preferably located at different axial positions (axial heights) of the central portion of the extruder, so that the secondary handle segments extend skew with respect to the central axis of the extruder. Thus, the primary handle segments are positioned with a lowest possible distance to the central portion of the extruder still allowing a comfortable handling. The secondary handle segments preferably are attached to the central portion of the hand welding extruder via two connecting bars, wherein the longitudinal axes of the connecting bars extending at opposite sides of and with a distance to the central axis of the extruder unit. Thus, the handle can safely transmit a torque exerted by the user to the central extruder axis by providing a lever between the two connecting bars and the central axis.

Since the extruder die and/or the distal portion of the outlet air duct can be rotated about the central extruder axis, and thus, the extruder allows a 360 degree rotation during operation, the user can choose arbitrarily on which side of the extruder the primary handle segment is to be arranged more distally or more proximally. This arrangement enables a change between a right-handed operation and a left-handed operation without requiring rearrangement of the handle.

According to an independent further development of the invention, the motor unit is coaxially arranged with the extruder screw of the extruder unit and/or the fan of the air blower unit. Thus, the coupling of the motor unit with the extruder unit and air blower unit does not need any transmission unit or just needs one transmission units since the extruder unit and/or the air blower unit is drivable by the motor unit directly. This saves construction space as well as weight and energy loss of a transmission unit.

According to an independent further development of the invention, the extruder casing preferably has a substantially tubular shape. This configuration is very compact and allows reducing the size and weight of the hand welding extruder and also reduces risk of injury of the user. Furthermore, it allows good transition of dissipating heat from the extruder unit to the encompassing air blower unit.

Preferably, a control unit is provided, wherein the control unit is preferably arranged within the motor unit. The control unit may be split into two or more partitions arranged at different circumferential positions of the motor unit. In this manner, space may be provided for arranging a display and/or a passageway for the material inlet channel at circumferential positions between the split parts of the control unit, for example. Thus, the size of the hand welding extruder can be further reduced. The control unit is preferably located at the motor unit of the hand welding extruder because the heat dissipation in that area is reduced compared to the heat dissipation in an area encompassing the extruder screw. The control unit may be an electric unit and may comprise a display showing some operation conditions such as temperatures within the processing chamber or within the outlet air duct. To this, a plurality of sensors such as temperature sensors may be arranged at respective positions of the hand welding extruder and connected to the control unit. Furthermore, the control unit may provide control signals for controlling the electrical power delivered to the heating elements or the motor unit, in order to achieve desired operating conditions, which may be selected or adjusted by a user via an input device (switches or knobs) connected to the control device, for example. It has to be noted, that usually all heating elements of the hand welding extruder and the motor(s) of the motor unit are driven by electrical power.

The air blower unit may additionally be configured to provide a stream of relatively cool air compared to the temperature of the extruder unit to the control unit and/or the motor unit. This can be e.g. an additional stream of environmental air that is sucked into the air blower unit before it passes the fan, or it can be an additional outlet air stream branched off after the air has passed the fan.

In the following, advantageous and preferred embodiments of the hand welding extruder according to the invention will be described with respect to the drawings listed below. The expressions "left", "right", "below" and "above" used in the following description are referred to drawings in an alignment such that the reference numbers and the notations of the figures can be read in normal orientation. Moreover, in the following description, the terms "top" and "side" are merely used for the sake of orientation with respect to the hand welding extruder shown in the drawings. It is clear that the hand welding extruder according to the invention may be rotated about its longitudinal axis during use, so that the terms "top" and "side" do not relate to a certain spatial position of the hand welding extruder during use or storage. In the drawings:
- Fig. 1: is a schematic side view of a hand welding extruder according to the prior art with a separate extruder unit and air blower unit;
- Fig. 2: is a schematic side view of a first embodiment according to a conventional extruder with a combined drive unit;
- Fig. 3: is a schematic side view of a second embodiment according to the invention with coaxially arranged extruder unit and air blower unit;
- Fig. 4: is a schematic side view of an arrangement of the control unit at the motor unit;
- Fig. 5: is a schematic axial view of the arrangement of the control unit and the motor unit of Fig. 4;
- Fig. 6: is a schematic side view of a hand welding extruder according to the invention with a handle;
- Fig. 7: is a schematic top view of the embodiment of Fig. 6;
- Fig. 8: is a schematic side view showing the third embodiment according to the invention;
- Fig. 9: is a schematic sectional view showing a part of the third embodiment according to the invention; and
- Fig. 10: is a schematic sectional view showing a part of a fourth embodiment according to the invention.

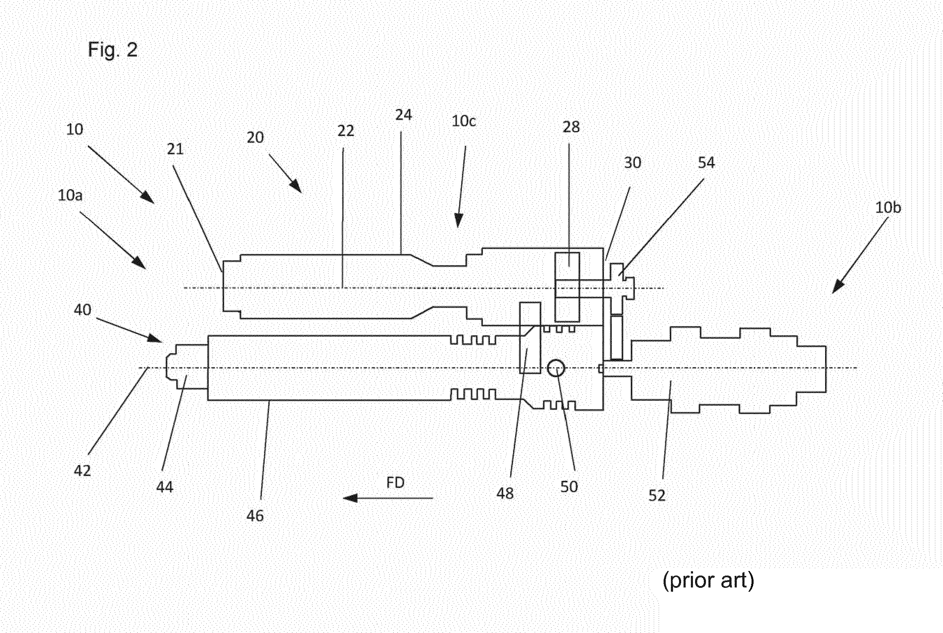

Referring to Fig. 2, a first embodiment of a conventional hand welding extruder 10 comprises an air blower unit 20, an extruder unit 40 and a motor unit 52. The hand welding extruder 10 comprises a central portion 10c that is located between a proximal end 10b and a distal end 10a of the hand welding extruder 10.

The extruder unit 40 comprises an extruder axis 42, a not shown extruder screw, an extruder casing 46, a processing chamber (not shown), a heating element 48 for heating the plastic material within the processing chamber, an extruder die 44, a material inlet channel 50 and the motor unit 52 for driving the extruder screw. The extruder unit 40 has a substantially tubular shape and extends coaxially with the extruder axis 42. Preferably, extruder casing 46 comprises a thermal insulation (not shown) for reducing the dissipation of heat from the inside of hand welding extruder 10 and thereby saving energy and reducing the risk of an operator of the hand welding extruder 10 getting hurt. The extruder screw is extending coaxially with extruder axis 42 as well and has a feeding direction FD in which the plastic material is forwarded by the extruder screw when the extruder screw is rotating about the extruder axis 42 in a respective operation direction. The extruder casing 46 encompasses the processing chamber, wherein the processing chamber surrounds a center part of the extruder screw. Heating element 48 is located at a side of extruder unit 40 that is adjacent to air blower unit 20 and does not fully extend over the full diameter of extruder unit 40. In an alternative embodiment, heating element 48 extends over the full diameter of extruder unit 40.In the illustrated embodiment, heating element 48 has an extension in feeding direction FD that is a small fraction of the extension of extruder unit 40 in feeding direction FD only. In an alternative embodiment, heating element 48 extends in feeding direction FD to a degree further than illustrated, up to the full extension of extruder unit 40 in feeding direction FD.

Material inlet channel 50 extends from a side through the extruder casing 46 to the processing chamber. Material inlet channel 50 may be substantially perpendicular to the extruder axis 42. Alternatively, in a preferred embodiment, the material inlet channel 50 extend substantially in axial direction from the processing chamber 41 through the motor unit 52 to the proximal end 10b of the hand welding extruder. Extruder die 44 is located at a distal end 10a of extruder unit 40, to which the plastic material is forwarded by the extruder screw. The extruder screw is located inside extruder casing 46 and forming a gap with an inner wall of the processing chamber. In feeding direction FD of the extruder screw, the gap between the extruder screw and the inner wall of the processing chamber decreases constantly. In this embodiment, motor unit 52 and extruder unit 40 are arranged coaxially, wherein motor unit 52 is located at the proximal end 10b of the hand welding extruder 10. Motor unit 52 is directly coupled with the extruder screw. In an alternative configuration, motor unit 52 is coupled with the extruder screw via a transmission, e.g. a respective gear for transforming the rotation frequency of motor unit 52 to a desired rotation frequency of the extruder screw. In embodiments having a central heating element 49 arranged at or within the extruder screw 43, the gear coupled to the extruder screw has at least one sliding contact configured to transmit electrical power to the central heating element 49 for heating.

Air blower unit 20 comprises an air outlet 21, an air blower axis 22, an air blower casing 24, a fan 28 and an air inlet 30. The air blower unit 20 substantially has a tubular shape and extends coaxially with air blower axis 22. Air blower axis 22 is substantially parallel to extruder axis 42. In an alternative embodiment, air blower axis 22 and extruder axis 42 are arranged angularly with respect to each other in a way that air outlet 21 is directed at extruder die 44 and/or extruder axis 42. Alternatively or in addition, air blower unit 20 can be pivotably arranged at extruder unit 40 and/or comprises an air outlet 21 that is pivotably arranged at air blower unit 20. Thus, a stream of hot air, discharged from the air blower unit 20, can be adjusted to a desired direction.

Preferably, air blower casing 24 comprises a thermal insulation (not shown) for reducing the dissipation of heat from the inside of hand welding extruder 10 and thereby saving energy and reducing the risk of an operator of the hand welding extruder 10 getting hurt. A part of the heating element 48 of extruder unit 40 is arranged inside air blower unit 20 for heating air that has been sucked into air blower unit 20 by fan 28. In this embodiment, heating element 48 does not extend over the full diameter of air blower unit 20. Alternatively, heating element can extend over the full diameter of air blower unit 20.

In the illustrated embodiment, air blower unit 20 and extruder unit 40 are arranged substantially parallel and abutting each other in an area near material inlet channel 50 of extruder unit 40. Alternatively, air blower unit 20 can be arranged with respect to extruder unit 40 such that air outlet 21 is directed at extruder die 44 and/or at extruder axis 42 outside extruder unit 40 and adjacent to extruder die 44. As illustrated, material inlet channel 50 has an opening that is substantially radially facing away from extruder axis 42. In an alternative embodiment, material inlet channel 50 extends substantially coaxially with motor unit 52 and through motor unit 52.

Motor unit 52 is coupled with fan 28 of air blower unit 20 via gear 54. In this embodiment, gear 54 is configured for translating rotation speed of motor unit 52 to a higher rotation speed of fan 28. Although gear 54, as illustrated, just has one gear transmission ratio, in an alternative embodiment, a gear with multiple transmission ratios can be provided for coupling motor unit 52 with the extruder screw and/or with fan 28. The gear may also have multiple transmission stages for further increasing the rotation speed difference between the fan 28 and the extruder screw. Due to the use of one motor unit 52 with one gear 54 and one common heating element 48, the hand welding extruder 10 according to Fig. 2 has smaller dimensions, less weight and less energy consumption than the ordinary hand welding extruder of Fig. 1.

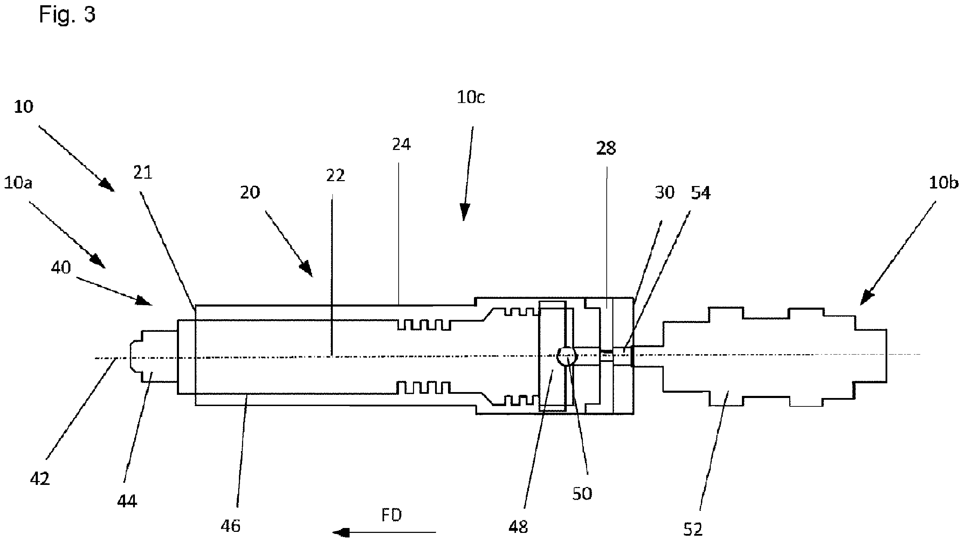

Fig. 3 schematically shows a second embodiment of a hand welding extruder 10 according to the invention in side view. The second embodiment of hand welding extruder 10 basically has the same components as the first embodiment of hand welding extruder 10 of Fig. 2, wherein in the second embodiment, extruder unit 40 and air blower unit 20 are arranged coaxially. Thus, air blower unit 20 substantially encompasses extruder unit 40.

In the embodiment shown in Fig. 3, Motor unit 52 is arranged coaxially with air blower axis 22 and extruder axis 42 and located at the proximal end 10b of hand welding extruder 10. Alternatively, motor unit 52 can is not arranged coaxially with extruder axis 42. In this alternative, center axis of motor unit 52 can be arranged substantially parallel and/or adjacent to extruder axis 42. Motor unit 52 can further be arranged angularly with respect to extruder axis 42.

Motor unit 52 is coupled with the extruder screw and fan 28 via gear 54. Hence, rotating speeds of extruder screw and fan 28 and motor unit 52 can be different. Preferably, gear 54 has more than one transmission ratio. In contrast to the first embodiment as shown in Fig. 2, the extruder casing 46 of the second embodiment of the invention as shown in Fig. 3 does not need to be thermally insulated because a certain amount of heat transfer from extruder unit 40 to air blower unit 20 is useful for heating up the air passing through air blowing unit 20. Preferably, air blower casing 24 comprises a thermal insulation for reducing the dissipation of heat from the inside of hand welding extruder 10 and thereby saving energy and reducing the risk of an operator of the hand welding extruder 10 getting hurt. In addition, a not illustrated main casing can be provided for providing a casing that covers all components of the hand welding extruder 10 that do not need to be exposed to the environment, so that all components are arranged within a single casing, with the exception of a handle and the distal end 10a or the extruder die 44, respectively. Preferably, at least a part of the air blower housing 24 constitutes at least a part of the main housing, thereby saving material and weight.

Heating element 48 is located near an end of air blower unit 20 that is adjacent to motor unit 52. Heating element 48 substantially has a tubular shape and substantially extends over the full cross-section of air blower unit 20, leaving a hole for the extruder screw or for that part of gear 54 that is coupled to the extruder screw. It is also feasible that heating element 48 can be omitted if a central heating element 49 at or within the extruder screw is provided. In this case, the heat input of the central heating element 49 may be sufficient so that the heat dissipated through the extruder unit casing 46 provides for a desired temperature of the air at the air outlet 21. If the desired temperature is not reached, it may be sufficient to provide a small separate air heating element 25 in the vicinity of the air outlet 21 for an additional small heat input. Fan 28 is located in between motor unit 52 and heating element 48. In an alternative embodiment of the invention, motor unit 52 can be located in between fan 28 and heating element 48. Thus, in operation, environmental air can be blown by fan 28 at motor unit 52, thereby cooling motor unit 52 and pre-heating the air. Subsequently, the pre-heated air will be blown to heating element 48 and further heated by the heating element 48 before being discharged the blower unit 20 at the air outlet 21.

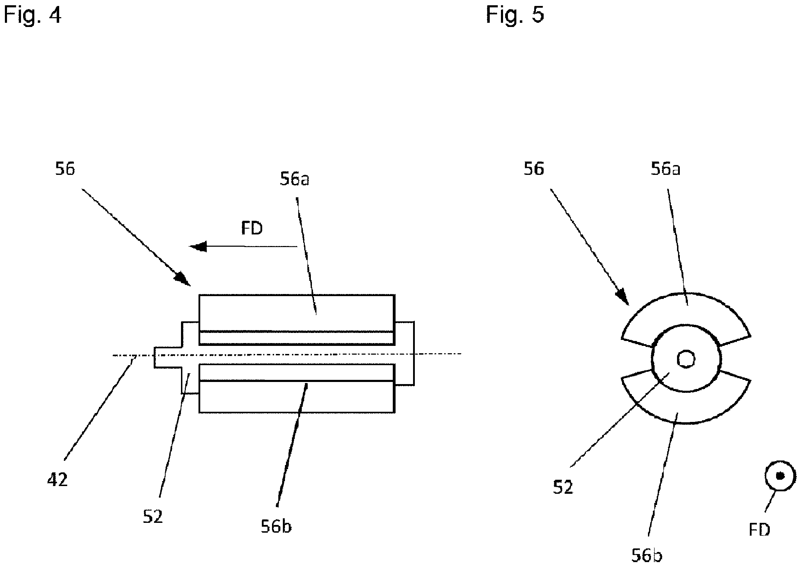

Fig. 4 and Fig. 5 schematically show an arrangement of motor unit 52 and control unit 56 of hand welding extruder 10, wherein Fig. 4 is a side view and Fig. 5 an axial view opposite to feeding direction FD. In this embodiment, control unit 56 comprises a first part 56a and a second part 56b, first part 56a and second part 56b both similar shaped like a part of a tube. Control unit 56 has an inner diameter that corresponds to and abuts an outer diameter of motor within the motor unit 52. An axial length of control unit 56 is equal to or shorter than an axial length of motor unit 52. In this embodiment, first part 56a and second part 56b of control unit 56 are designed as separate parts, alternatively, control unit 56 can be provided as one part.

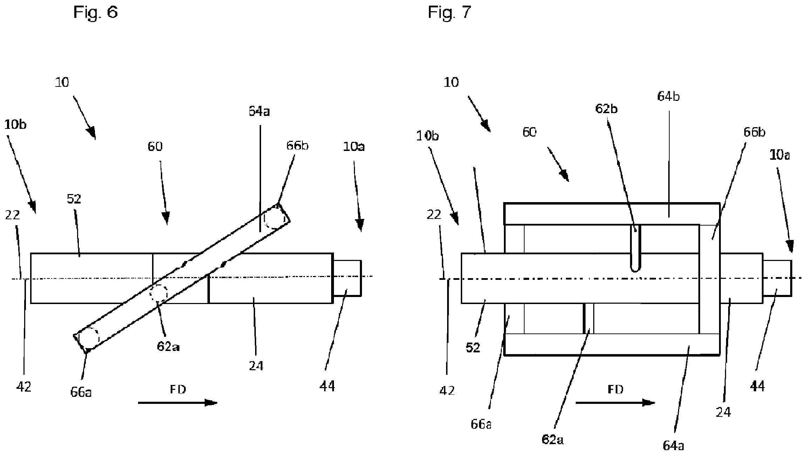

As can be inferred from Fig. 6 and Fig. 7, a handle 60 is provided to hand welding extruder 10 according to the present invention. The handle 60 is a fixed handle which does not need any adjustments. The handle 60 comprises two primary handle segments 66a, 66b (handle bars) extending perpendicular to the central portion of the hand welding extruder and to the central axis 42 of the extruder unit 40. The handle segments have a certain distance to said central portion and reside on opposite sides of the same. Two secondary handle segments 64a, 64b (handle bars) are connecting the primary handle segments 66a, 66b on both sides, i.e. on both ends thereof. The two primary handle segments 64a, 64b are preferably located at different axial positions, i.e. axial heights of the central portion 10c of the extruder, so that the secondary handle segments 66a, 66b extend skew with respect to the central axis of the extruder. The secondary handle segments 64a, 64b preferably are attached to the central portion 10c of the hand welding extruder via two connecting bars 62a, 62b. The longitudinal axes of the connecting bars extend at opposite sides of the central axis of the extruder unit and are arranged perpendicular to the same and with a distance to the same, as is shown in Figs. 6 and 7. In this manner, a lever is formed in all spatial directions between the central axis of the extruder and the connecting bars 62a, 62b which improves transmission of a torque and other forces exerted by the user via the handle to the central portion 10c of the extruder. Thus, operability and reliability of the hand welding extruder is further improved.

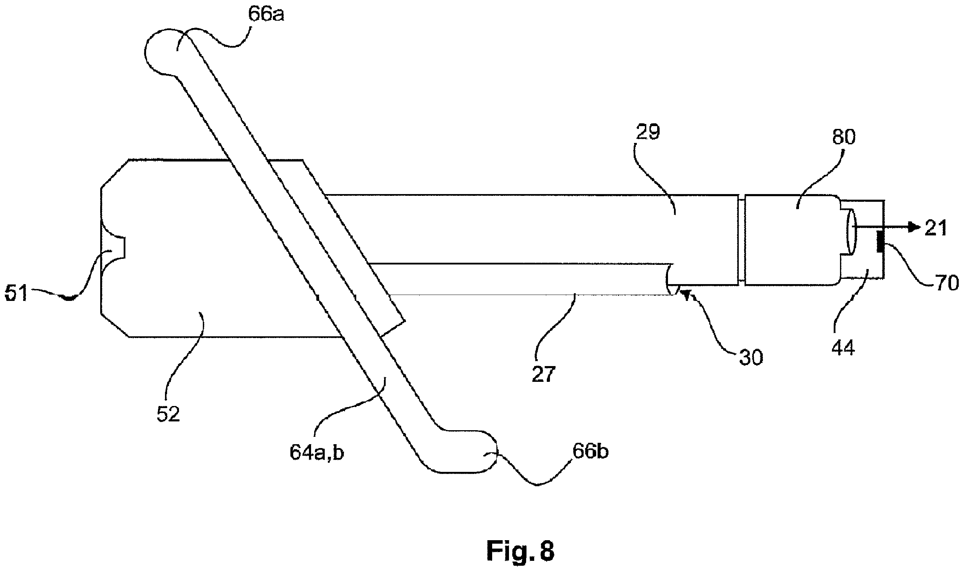

Fig. 8 shows a schematic side view of a hand welding extruder according to a third embodiment of the invention. the general arrangement of the third embodiment corresponds to the arrangement of the second embodiment, with the exception of the following differences. In the third embodiment, the air blower unit 20 comprises an outlet air duct substantially circumferentially encompassing the extruder unit 40, so that the air from the fan 28 is guided along the outside of the hot extruder unit und is thus heated by dissipated heat from the extruder casing 46. Preferably, the outlet air duct 29 has a distal portion 80 with an air outlet 21, wherein the portion 80 is adapted to be rotatable about the central axis 42 of the extruder unit 40. Thus, the distal portion can be preferably freely rotated about 360 degrees and may serve as an adjusting means for the air outlet 21, so that the air outlet 21 can be positioned at a desired circumferential position of the extruder unit. In this manner, the air outlet can be adapted to a desired moving direction during a continuous welding operation so that the air outlet 21 is enabled to direct the hot air flow towards a position directly in front of the welding site for warming up that portions of the welding seam which are approaching the material outlet 70 or the extruder die 44 arranged at the distal end 10a of the hand welding extruder. If the extruder die 44 is not multidirectional, but requires a certain alignment with respect to the moving direction during the welding operation, the extruder die 44 is preferably rotatably connected to the extruder unit 40 so that it can be rotated about the central axis 42 of the extruder unit 40, too. Preferably, the extruder die 44 and the distal portion 80 of the outlet air duct 29 are configured to be rotated synchronously, so that the air stream exiting the air outlet 21 is always directed to the appropriate site in front of the extruder die with respect to the moving direction during the welding operation.

Furthermore, the third embodiment shown in Fig. 8 has an inlet air duct 27 which at least partially encompasses the outlet air duct 29. The inlet air duct 27 has an air inlet 30 which is sufficiently spaced from, but arranged in the region of the distal end 10a of the hand welding extruder 10 so that mainly fresh and cool air is drawn into the air inlet 30. The inlet air duct 27 is guiding cool air from the air inlet 30 to the fan 28 arranged at a proximal end of the inlet air duct 27, and is arranged at a circumferential position corresponding to the first handle segment 66b. Thus, the inlet air duct 27 forms an additional barrier or sheath preventing the heat of the extruder unit 40 or the heat of the outlet air duct 29 from reaching a hand of a user gripping the handle segment 66b. In this manner, operability and safety are improved and user comfort is enhanced, while reducing the risk of injury of the user by heat. It is also feasible to provide two or more separate inlet air ducts as described above, wherein these multiple inlet air ducts 29 may be arranged at different circumferential positions around the central portion 10c of the extruder according to the requirement of additional heat shielding, for example. In this third embodiment, the flow direction of the air within the air blower unit is inverted in the vicinity of the axial position of the fan 28 from a proximal direction to a distal direction. As already mentioned above, a part of the air stream within the outlet air duct 29 may be branched off directly after the fan 28 and guided as a cool air stream to the motor unit 52 and/or the control unit 56 for cooling these components. Alternatively, an additional air stream coming from the proximal end 10b and passing and cooling the motor unit 52 and/or the control unit 56 may be merged with the air stream of the inlet air duct 27 before entering the fan 28. Moreover, Fig. 8 shows a proximal opening 51 of the material inlet channel 50. The opening 51 is preferably funnel-shaped so that a user can thread a plastic material into the inlet channel 50 nearly blind, i.e. without closely looking at the opening 51. This further improves operability and user comfort.

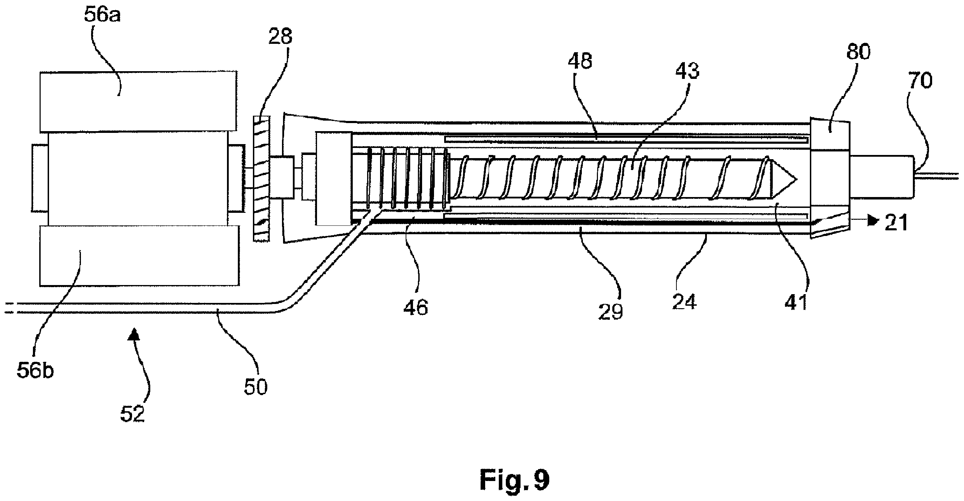

Fig. 9 is a schematic sectional view showing some components of the third embodiment of Fig. 8. In this embodiment, the material inlet channel 50 passes along a side of the motor unit 52 within the casing of the motor unit from the proximal opening 51 to the processing chamber 41. In Fig. 9, for the sake of clear depiction, the material inlet channel 50 is shown to pass the motor unit at a circumferential position corresponding to the circumferential position of the control unit part 56b. However, as already mentioned before, the material inlet channel 50 preferably extends along the motor unit at a circumferential position between the control unit parts 56a, 56b or adjacent to a single control unit 56, respectively, in order to achieve a compact design. In this embodiment, the motor unit 52 and the electric motor, respectively, may be arranged coaxially to the extruder screw 43, wherein the plastic material is fed laterally into the proximal end portion of the processing chamber 41. The motor unit may comprise a planetary gear for providing different rotation speeds for the fan 28 and the extruder screw 43 via coaxial output shafts, for example. However, other arrangements of the axes of the motor unit and the extruder screw are feasible, too.

As also shown in Fig. 9, an extruder heating element 48 is arranged at or within the extruder casing 46 of the extruder unit 40. That heating element 48 is configured to simultaneously heat the plastic material inside the processing chamber 41 within the extruder casing 46 and the air stream flowing within the outlet air duct 29 from the fan 28 to the air outlet 21. The heating element 48 may extend over a substantially the entire length of the extruder casing 46 or the processing chamber 41, respectively. Alternatively, the heating element 48 may extend over a distal portion of the extruder casing 46, as shown in Fig. 9, or over a proximal portion of the extruder casing 46. In the latter case, since the air stream within the outlet air duct 29 downstream of the heating element 48 is hot, the hot air stream towards the distal end of the extruder unit 40 can dissipate heat to the plastic material inside the processing chamber 41. Under certain circumstances, this heat transfer to the plastic material inside the processing chamber 41 may be sufficient, so that no further heating element within the processing chamber 41 is required.

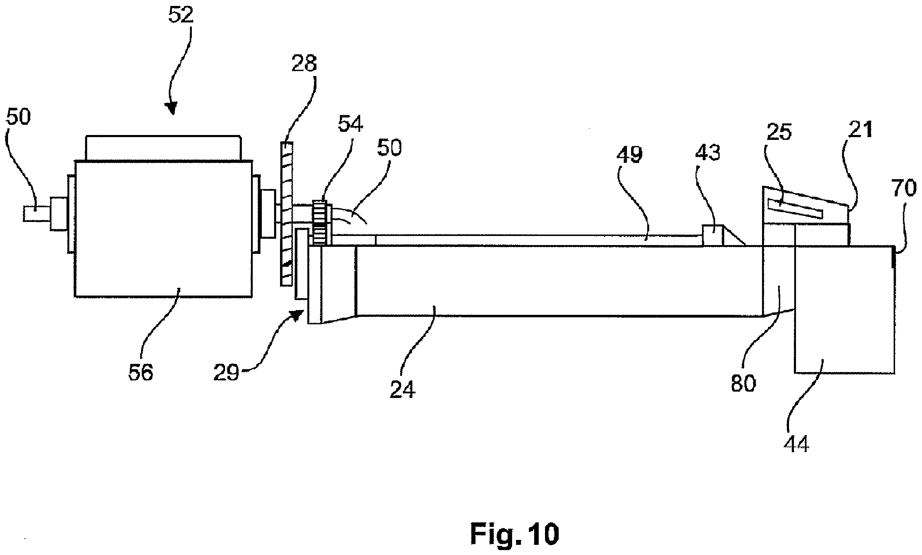

In other modified embodiments based on the embodiment of Fig. 9, a central heating unit 49 is provided at or within the extruder screw 43, as shown in Fig. 10 in which the extruder screw 43 is cut out (screw surface omitted) and a core heating element 49 of the extruder screw 43 is depicted. The heat transferred from the central heating unit 49 to the plastic material inside the processing chamber 41 may be enough, so that no further extruder heating element 48 is required. It is also feasible that the central heating element 49 provides enough heat to the plastic material, so that the heat dissipated from the extruder unit 40 via the extruder casing 46 to the air stream within the encompassing outlet air duct 29 is sufficiently increasing the outlet air temperature to a desired value, or nearly to the desired value. If the desired air outlet temperature is not reached, a relative small separate air heating element 25, shown in Fig. 10, may be optionally arranged directly upstream or within the distal portion 80 of the outlet air duct 29, for example, so as to provide for the remaining heat input to reach the desired outlet air temperature.

Fig. 10 is a schematic sectional view showing some components of a fourth embodiment of the invention which is similar to the third embodiment. The fourth embodiment differs from the third embodiment mainly by the arrangement of the material inlet channel 50 and the axes of the motor unit 52 and the extruder screw 43. In Fig. 10, the upper parts of inter alia the air blower casing 24, the extruder casing 46 and the extruder screw 43 are cut out. In this embodiment, the material inlet channel 50 passes through a hollow output shaft of the motor unit 52 or the electric motor, respectively, and leads from the proximal opening 51 to the processing chamber 41. In this case, the motor unit 52 or the electric motor, respectively, and the extruder screw 43 are arranged with radially spaced parallel axes. The motor unit 52 is coupled to the extruder screw 43 via a simple spur gear having an offset between input and output shafts. In this manner, the plastic material exiting the hollow output shaft of the motor unit 52 may be guided laterally past the gear and may be fed laterally into the proximal end portion of the processing chamber 41, as shown in Fig. 10.

In both embodiments shown in Figs. 9 and 10, a very compact hand welding extruder can be achieved having a simple and relative straight plastic material inlet channel 50, so that reliability and operability are further improved.

### LIST OF REFERENCE SIGNS

- 10: hand welding extruder
- 10a: distal end
- 10b: proximal end
- 10c: central portion
- 20: air blower unit
- 21: air outlet
- 22: air blower axis
- 24: air blower casing
- 25: separate air heating element
- 26: air blower heating element
- 27: inlet air duct
- 28: fan
- 29: outlet air duct
- 30: air inlet
- 32: air blower motor unit
- 40: extruder unit
- 41: processing chamber
- 42: extruder axis
- 43: extruder screw
- 44: extruder die
- 46: extruder casing
- 48: extruder heating element
- 49: central heating element
- 50: material inlet channel
- 51: proximal opening of material inlet channel
- 52: motor unit
- 54: gear
- 56: control unit
- 56a: first part of control unit
- 56b: second part of control unit
- 60: handle
- 62a, 62b: handle connecting bars
- 64a, 64b: secondary handle segments
- 66a, 66b: primary handle segments
- 70: material outlet
- 80: distal portion of outlet air duct
- FD: feeding direction

## Claims

1. A hand welding extruder (10) for welding plastic materials with a proximal end (10b), a distal end (10a) and a central portion (10c) longitudinally extending between the proximal end (10b) and the distal end (10a), the hand welding extruder (10) further comprising:
a material inlet channel (50) for feeding plastic material;
a material outlet (70) at the distal end (10a);
an extruder unit (40) having a longitudinally extending extruder casing (46) encompassing a processing chamber (41) of the extruder unit (40), a central extruder axis (42) extending along the central portion (10c), a central extruder screw (43) arranged coaxially with the extruder axis (42) and configured to convey the plastic material from the material inlet channel (50) through the processing chamber (41) towards the material outlet (70), and at least one extruder heating element (48) for heating the plastic material inside the processing chamber (41);
a handle (60) for holding and guiding the hand welding extruder (10);
an air blower unit (20) for blowing hot air towards a welding site in the vicinity of the material outlet (70), the air blower unit (20) having a longitudinally extending air blower casing (24), an air inlet (30) at an end of an inlet air duct (27), an air outlet (21) arranged at a distal end of an outlet air duct (29) in the vicinity of the material outlet (70), and a fan (28) arranged to convey air from the inlet air duct (27) to the outlet air duct (28) of the air blower unit (20); and
a motor unit (52) arranged between the extruder unit (40) and the proximal end (10b) and configured to drive the extruder screw (43) and the fan (28) of the air blower unit (20);
**characterized in that** the air blower casing (24) at least partially circumferentially encompasses at least a portion of the length of the extruder unit (40),
the inlet air duct (27) at least partially encompasses circumferentially at least a portion of the length of the extruder casing (46) and/or the outlet air duct (29), and
wherein the air inlet (30) is arranged at the distal end of the inlet air duct (27) and preferably is substantially directed to the distal end (10a).

2. The hand welding extruder according to claim 1,
further comprising a gear (54) providing different rotation speeds for the extruder screw (43) of the extruder unit (40) and the fan (28) of the air blower unit (20).

3. The hand welding extruder according to claim 1 or 2,
wherein the outlet air duct (29) at least partially encompasses circumferentially at least a portion of the length of the extruder casing (46).

4. The hand welding extruder according to any of the previous claims,
wherein the at least one extruder heating element (48) is configured to heat also air inside the air blower unit (20), preferably air flowing through the outlet air duct (29).

5. The hand welding extruder according to claim 4,
wherein a part of the at least one heating element (48) is arranged at the extruder casing (46) for heating the plastic material inside the processing chamber (41), and wherein another part of the at least one heating element (48) is arranged at or within the outlet air duct (29) of the air blower unit (20) for heating the air flowing to the air outlet (21).

6. The hand welding extruder according to any of the claims 1 to 4,
wherein the at least one extruder heating element is a central heating element (49) arranged at or within the extruder screw (43) for heating the plastic material inside the processing chamber (41).

7. The hand welding extruder according to any of the previous claims,
further comprising a separate air heating element (25) arranged within the outlet air duct (29), preferably in the vicinity of the air outlet (21).

8. The hand welding extruder according to claim 1,
wherein at least one portion of the inlet air duct (27) is arranged at a circumferential position corresponding to a handle segment (66b) of the handle (60) so that the portion of the inlet air duct (27) resides between the handle segment (66b) and the extruder unit (40).

9. The hand welding extruder according to any of the previous claims,
wherein a distal portion (80) of the outlet air duct (29) comprising the air outlet (21) is configured to be rotatable about the extruder axis with respect to the extruder casing (46).

10. The hand welding extruder according to claim 9,
further comprising a extruder die (44) at the material outlet (70), wherein the extruder die (44) is configured to be rotatable about the extruder axis (42) with respect to the extruder casing (46), and wherein the extruder die (44) is configured to rotate synchronously with the distal portion (80) of the outlet air duct (29).

11. The hand welding extruder according to any of the previous claims,
wherein the material inlet channel (50) has a proximal opening (51) at the proximal end (10b) of the hand welding extruder (10), wherein the proximal opening (51) preferably is shaped like a funnel.

12. The hand welding extruder according to claim 11,
wherein the material inlet channel (50) passes from the proximal opening (51) along a side of the motor unit (52) into the processing chamber (41).

13. The hand welding extruder according to claim 11,
wherein the material inlet channel (50) passes from the proximal opening (51) through a hollow output shaft of the motor unit (52) into the processing chamber (41).

14. The hand welding extruder according to any of the previous claims,
wherein the handle (60) comprises two primary handle segments (66a, 66b) extending perpendicular to and in distance to the central portion (10c) of the hand welding extruder (10) on opposite sides of said central portion (10c), and two secondary handle segments (64a, 64b) connecting the primary handle segments (66a, 66b) on both sides,
wherein the two primary handle segments (66a, 66b) are located at different axial positions with respect to the central portion (10c), so that the secondary handle segments (64a, 64b) extend skew with respect to the central axis (42) of the extruder unit (40),
and wherein the secondary handle segments (64a, 64b) are attached to the central portion (10c) of the hand welding extruder (10) via two connecting bars (62a, 62b), the longitudinal axes of the connecting bars (62a, 62b) being arranged at opposite sides of and with a distance to the central axis (42) of the extruder unit (40).

## Patentansprüche

1. Handschweißextruder (10) zum Schweißen von Kunststoffen mit einem proximalen Ende (10b), einem distalen Ende (10a) und einem mittleren Abschnitt (10c), der sich in Längsrichtung zwischen dem proximalen Ende (10b) und dem distalen Ende (10a) erstreckt, wobei der Handschweißextruder (10) ferner umfasst:
einen Materialeinlasskanal (50) zum Zuführen eines Kunststoffmaterials;
einen Materialauslass (70) am distalen Ende (10a);
eine Extrudereinheit (40), die ein sich in Längsrichtung erstreckendes Extrudergehäuse (46), das eine Verarbeitungskammer (41) der Extrudereinheit (40) umschließt, eine Extrudermittelachse (42), die längs des mittleren Abschnitts (10c) verläuft, eine mittige Extruderschnecke (43), die koaxial zur Extruderachse (42) angeordnet und dazu eingerichtet ist, das Kunststoffmaterial vom Materialeinlasskanal (50) durch die Verarbeitungskammer (41) zum Materialauslass (70) zu fördern, und mindestens ein Extruderheizelement (48) zum Erhitzen des Kunststoffmaterials in der Verarbeitungskammer (41) aufweist;
einen Griff (60) zum Halten und Führen des Handschweißextruders (10);
eine Luftgebläseeinheit (20) zum Blasen von heißer Luft in Richtung einer Schweißstelle in der Nähe des Materialauslasses (70), wobei die Luftgebläseeinheit (20) ein sich in Längsrichtung erstreckendes Luftgebläsegehäuse (24), einen Lufteinlass (30) an einem Ende eines Zuluftkanals (27), einen Luftauslass (21), der an einem distalen eines Abluftkanals (29) in der Nähe des Materialauslasses (70) angeordnet ist, und ein Gebläse (28) aufweist, das dazu eingerichtet ist, Luft vom Zuluftkanal (27) zum Abluftkanal (28) der Luftgebläseeinheit (20) zu fördern; und
eine Motoreinheit (52), die zwischen der Extrudereinheit (40) und dem proximalen Ende (10b) angeordnet und dazu eingerichtet ist, die Extruderschnecke (43) und das Gebläse (28) der Luftgebläseeinheit (20) anzutreiben;
**dadurch gekennzeichnet, dass** das Luftgebläsegehäuse (24) zumindest einen Teil der Länge der Extrudereinheit (40) zumindest teilweise zirkumferenziell umfasst,
der Zuluftkanal (27) zumindest einen Teil der Länge des Extrudergehäuses (46) und/oder des Abluftkanals (29) zumindest teilweise zirkumferenziell umfasst, und
wobei der Lufteinlass (30) am distalen Ende des Zuluftkanals (27) angeordnet und vorzugsweise im Wesentlichen zum distalen Ende (10a) hin gerichtet ist.

2. Handschweißextruder nach Anspruch 1,
ferner umfassend ein Getriebe (54), das verschiedene Drehgeschwindigkeiten für die Extruderschnecke (43) der Extrudereinheit (40) und das Gebläse (28) der Luftgebläseeinheit (20) bereitstellt.

3. Handschweißextruder nach Anspruch 1 oder 2,
wobei der Abluftkanal (29) zumindest einen Teil der Länge des Extrudergehäuses (46) zumindest teilweise zirkumferenziell umfasst.

4. Handschweißextruder nach einem der vorhergehenden Ansprüche,
wobei das mindestens eine Extruderheizelement (48) dazu eingerichtet ist, auch Luft innerhalb der Luftgebläseeinheit (20), vorzugsweise durch den Abluftkanal (29) strömende Luft, zu erhitzen.

5. Handschweißextruder nach Anspruch 4,
wobei ein Teil des mindestens einen Heizelements (48) bei dem Extrudergehäuse (46) angeordnet ist, um das Kunststoffmaterial in der Verarbeitungskammer (41) zu erhitzen, und wobei ein anderer Teil des mindestens einen Heizelements (48) bei oder in dem Abluftkanal (29) der Luftgebläseeinheit (20) angeordnet ist, um die zum Luftauslass (21) strömende Luft zu erhitzen.

6. Handschweißextruder nach einem der Ansprüche 1 bis 4,
wobei das mindestens eine Extruderheizelement ein mittiges Heizelement (49) ist, das bei oder in der Extruderschnecke (43) angeordnet ist, um das Kunststoffmaterial in der Verarbeitungskammer (41) zu erhitzen.

7. Handschweißextruder nach einem der vorhergehenden Ansprüche,
ferner umfassend ein separates Luftheizelement (25), das in dem Abluftkanal (29), vorzugsweise in der Nähe des Luftauslasses (21), angeordnet ist.

8. Handschweißextruder nach Anspruch 1,
wobei mindestens ein Abschnitt des Zuluftkanals (27) derart in einer Umfangsposition, die einem Griffsegment (66b) des Griffs (60) entspricht, angeordnet ist, dass der Abschnitt des Zuluftkanals (27) zwischen dem Griffsegment (66b) und der Extrudereinheit (40) liegt.

9. Handschweißextruder nach einem der vorhergehenden Ansprüche,
wobei ein distaler Abschnitt (80) des Abluftkanals (29), der den Luftauslass (21) umfasst, dazu eingerichtet ist, gegenüber dem Extrudergehäuse (46) um die Extruderachse drehbar zu sein.

10. Handschweißextruder nach Anspruch 9,
ferner umfassend eine Extruderdüse (44) am Materialauslass (70), wobei die Extruderdüse (44) dazu eingerichtet ist, gegenüber dem Extrudergehäuse (46) um die Extruderachse (42) drehbar zu sein, und wobei die Extruderdüse (44) dazu eingerichtet ist, sich synchron mit dem distalen Abschnitt (80) des Abluftkanals (29) zu drehen.

11. Handschweißextruder nach einem der vorhergehenden Ansprüche,
wobei der Materialeinlasskanal (50) eine proximale Öffnung (51) am proximalen Ende (10b) des Handschweißextruders (10) aufweist, wobei die proximale Öffnung (51) vorzugsweise wie ein Trichter geformt ist.

12. Handschweißextruder nach Anspruch 11,
wobei der Materialeinlasskanal (50) von der proximalen Öffnung (51) längs einer Seite der Motoreinheit (52) in die Verarbeitungskammer (41) verläuft.

13. Handschweißextruder nach Anspruch 11,
wobei der Materialeinlasskanal (50) von der proximalen Öffnung (51) durch eine Abtriebshohlwelle der Motoreinheit (52) in die Verarbeitungskammer (41) verläuft.

14. Handschweißextruder nach einem der vorhergehenden Ansprüche,
wobei der Griff (60) zwei primäre Griffsegmente (66a, 66b), die sich perpendikular und in einem Abstand zu dem mittleren Abschnitt (10c) des Handschweißextruders (10) auf entgegengesetzten Seiten dieses mittleren Abschnitts (10c) erstrecken, und zwei sekundäre Griffsegmente (64a, 64b) umfasst, welche die primären Griffsegmente (66a, 66b) auf beiden Seiten verbinden,
wobei die zwei primären Griffsegmente (66a, 66b) derart in verschiedenen axialen Positionen bezogen auf den mittleren Abschnitt (10c) angeordnet sind, dass die sekundären Griffsegmente (64a, 64b) schräg zur Mittelachse (42) der Extrudereinheit (40) verlaufen,
und wobei die sekundären Griffsegmente (64a, 64b) an dem mittleren Abschnitt (10c) des Handschweißextruders (10) über zwei Verbindungsstangen (62a, 62b) befestigt sind, wobei die Längsachsen der Verbindungsstangen (62a, 62b) auf entgegengesetzten Seiten von und mit einem Abstand zu der Mittelachse (42) der Extrudereinheit (40) angeordnet sind.

## Revendications

1. Extrudeuse-soudeuse manuelle (10) pour souder des matières plastiques, présentant une extrémité proximale (10b), une extrémité distale (10a) et une partie centrale (10c) qui s'étend longitudinalement entre l'extrémité proximale (10b) et l'extrémité distale (10a), l'extrudeuse-soudeuse manuelle (10) comprenant en outre :
un canal d'entrée de matière (50) pour l'alimentation en matière plastique ;
une sortie de matière (70) au niveau de l'extrémité distale (10a) ;
une unité d'extrudeuse (40) présentant une enveloppe d'extrudeuse (46) s'étendant longitudinalement, englobant une chambre de traitement (41) de l'unité d'extrudeuse (40), un axe central d'extrudeuse (42) s'étendant le long de la partie centrale (10c), une vis centrale d'extrudeuse (43) disposée coaxialement par rapport à l'axe d'extrudeuse (42) et conçue pour transporter la matière plastique depuis le canal d'entrée de matière (50) à travers la chambre de traitement (41) vers la sortie de matière (70) et au moins un élément chauffant d'extrudeuse (48) pour chauffer la matière plastique à l'intérieur de la chambre de traitement (41) ;
une poignée (60) pour maintenir et guider l'extrudeuse-soudeuse manuelle (10) ;
une unité de soufflante d'air (20) pour souffler de l'air chaud vers un site de soudage à proximité de la sortie de matière (70), l'unité de soufflante d'air (20) présentant une enveloppe (24) de soufflante d'air s'étendant longitudinalement, une entrée d'air (30) en une extrémité d'un conduit d'air d'entrée (27), une sortie d'air (21) disposée en une extrémité distale d'un conduit d'air de sortie (29) à proximité de la sortie de matière (70) et un ventilateur (28) agencé pour transporter l'air du conduit d'air d'entrée (27) au conduit d'air de sortie (28) de l'unité de soufflante d'air (20) ; et
une unité de moteur (52) disposée entre l'unité d'extrudeuse (40) et l'extrémité proximale (10b) et conçue pour entraîner la vis d'extrudeuse (43) et le ventilateur (28) de l'unité de soufflante d'air (20) ;
**caractérisée en ce que** l'enveloppe (24) de soufflante d'air englobe au moins partiellement de manière circonférentielle au moins une partie de la longueur de l'unité d'extrudeuse (40),
le conduit d'air d'entrée (27) englobe au moins partiellement de manière circonférentielle au moins une partie de la longueur de l'enveloppe d'extrudeuse (46) et/ou du conduit d'air de sortie (29) et
l'entrée d'air (30) étant disposée au niveau de l'extrémité distale du conduit d'air d'entrée (27) et étant préférablement sensiblement dirigée vers l'extrémité distale (10a).

2. Extrudeuse-soudeuse manuelle selon la revendication 1,
comprenant en outre un engrenage (54) fournissant différentes vitesses de rotation pour la vis d'extrudeuse (43) de l'unité d'extrudeuse (40) et pour le ventilateur (28) de l'unité de soufflante d'air (20).

3. Extrudeuse-soudeuse manuelle selon la revendication 1 ou 2,
le conduit d'air de sortie (29) englobant au moins partiellement de manière circonférentielle au moins une partie de la longueur de l'enveloppe d'extrudeuse (46).

4. Extrudeuse-soudeuse manuelle selon l'une quelconque des revendications précédentes,
ledit au moins un élément chauffant d'extrudeuse (48) étant conçu pour chauffer également de l'air à l'intérieur de l'unité de soufflante d'air (20), préférablement de l'air s'écoulant à travers le conduit d'air de sortie (29).

5. Extrudeuse-soudeuse manuelle selon la revendication 4,
une partie dudit au moins un élément chauffant (48) étant disposée au niveau de l'enveloppe d'extrudeuse (46) pour chauffer la matière plastique à l'intérieur de la chambre de traitement (41) et une autre partie dudit au moins un élément chauffant (48) étant disposée au niveau ou à l'intérieur du conduit d'air de sortie (29) de l'unité de soufflante d'air (20) pour chauffer l'air s'écoulant vers la sortie d'air (21).

6. Extrudeuse-soudeuse manuelle selon l'une quelconque des revendications 1 à 4,
ledit au moins un élément chauffant d'extrudeuse étant un élément chauffant central (49) disposé au niveau ou à l'intérieur de la vis d'extrudeuse (43) pour chauffer la matière plastique à l'intérieur de la chambre de traitement (41).

7. Extrudeuse-soudeuse manuelle selon l'une quelconque des revendications précédentes,
comprenant en outre un élément chauffant d'air (25) séparé disposé à l'intérieur du conduit d'air de sortie (29), préférablement à proximité de la sortie d'air (21).

8. Extrudeuse-soudeuse manuelle selon la revendication 1,
au moins une partie du conduit d'air d'entrée (27) étant disposée en une position circonférentielle correspondant à un segment de poignée (66b) de la poignée (60) de sorte que la partie du conduit d'air d'entrée (27) se trouve entre le segment de poignée (66b) et l'unité d'extrudeuse (40).

9. Extrudeuse-soudeuse manuelle selon l'une quelconque des revendications précédentes,
une partie distale (80) du conduit d'air de sortie (29) comprenant la sortie d'air (21) étant conçue pour pouvoir tourner autour de l'axe d'extrudeuse par rapport à l'enveloppe d'extrudeuse (46).

10. Extrudeuse-soudeuse manuelle selon la revendication 9,
comprenant en outre une filière d'extrudeuse (44) au niveau de la sortie de matière (70), la filière d'extrudeuse (44) étant conçue pour pouvoir tourner autour de l'axe d'extrudeuse (42) par rapport à l'enveloppe d'extrudeuse (46) et la filière d'extrudeuse (44) étant conçue pour tourner de manière synchrone avec la partie distale (80) du conduit d'air de sortie (29).

11. Extrudeuse-soudeuse manuelle selon l'une quelconque des revendications précédentes,
le canal d'entrée de matière (50) présentant une ouverture proximale (51) au niveau de l'extrémité proximale (10b) de l'extrudeuse-soudeuse manuelle (10), l'ouverture proximale (51) étant préférablement façonnée comme un entonnoir.

12. Extrudeuse-soudeuse manuelle selon la revendication 11,
le canal d'entrée de matière (50) passant depuis l'ouverture proximale (51) le long d'un côté de l'unité de moteur (52) dans la chambre de traitement (41).

13. Extrudeuse-soudeuse manuelle selon la revendication 11,
le canal d'entrée de matière (50) passant depuis l'ouverture proximale (51) à travers un arbre de sortie creux de l'unité de moteur (52) dans la chambre de traitement (41).

14. Extrudeuse-soudeuse manuelle selon l'une quelconque des revendications précédentes,
la poignée (60) comprenant deux segments de poignée primaires (66a, 66b) s'étendant perpendiculairement à la partie centrale (10c) de l'extrudeuse-soudeuse manuelle (10) et à distance de celle-ci sur des côtés opposés de ladite partie centrale (10c) et deux segments de poignée secondaires (64a, 64b) reliant les segments de poignée primaires (66a, 66b) sur les deux côtés,
les deux segments de poignée primaires (66a, 66b) étant situés en différentes positions axiales par rapport à la partie centrale (10c), de telle sorte que les segments de poignée secondaires (64a, 64b) s'étendent en biais par rapport à l'axe central (42) de l'unité d'extrudeuse (40)
et les segments de poignée secondaire (64a, 64b) étant fixés à la partie centrale (10c) de l'extrudeuse-soudeuse manuelle (10) par l'intermédiaire de deux barres de liaison (62a, 62b), les axes longitudinaux des barres de liaison (62a, 62b) étant disposés sur des côtés opposés de l'axe central (42) de l'unité d'extrudeuse (40) et à une distance par rapport à celui-ci.
